# EUROPÄISCHE PATENTSCHRIFT

(11) **EP 2 553 502 B1**
(45) Veröffentlichungstag und Bekanntmachung des Hinweises auf die Patenterteilung: **22.07.2015**
(21) Anmeldenummer: 10723044.3
(22) Anmeldetag: 19.05.2010
(51) Int. Cl.: G02B 1/10, G02B 5/08

(54) **REFLEKTOR MIT HOHER RESISTENZ GEGEN WITTERUNGS- UND KORROSIONSEINFLÜSSE UND VERFAHREN ZU SEINER HERSTELLUNG**
REFLECTOR HAVING HIGH RESISTANCE AGAINST WEATHER AND CORROSION EFFECTS AND METHOD FOR PRODUCING SAME
RÉFLECTEUR À HAUTE RÉSISTANCE AUX INFLUENCES DES INTEMPÉRIES ET DE LA CORROSION, ET SON PROCÉDÉ DE PRODUCTION

(30) Priorität: 01.04.2010 DE 102010013865
(43) Veröffentlichungstag der Anmeldung: 06.02.2013
(73) Patentinhaber: ALANOD GmbH & Co. KG, 58256 Ennepetal (DE)
(72) Erfinder: TEMPLIN, Frank, 58313 Herdecke (DE); PÜSCHL, René, 46514 Schermbeck (DE); KÜSTER, Harald, 82194 Gröbenzell (DE)
(74) Vertreter: Patentanwälte Dr. Solf & Zapf
(86) Internationale Anmeldenummer: PCT/EP2010/056902
(87) Internationale Veröffentlichungsnummer: WO 2011/120593

(56) Entgegenhaltungen:
- WO-A1-03/080328
- WO-A1-2007/059883
- WO-A2-2005/015272
- US-A- 6 067 189

## Beschreibung

Die Erfindung betrifft einen Reflektor für elektromagnetische Strahlung im Wellenlängenbereich von 100 nm bis 1 mm, mit hoher Resistenz gegen Witterungs- und Korrosionseinflüsse, umfassend
- einen metallischen Reflektorkörper, der eine reflektierende Oberfläche aufweist,
- oder einen Reflektorkörper, auf dem eine Reflexionsschicht abgeschieden ist,
- und eine transparente, aus einem Polysiloxan bestehende Deckschicht, die in einem Sol-Gel-Prozess gebildet ist.

Des Weiteren betrifft die Erfindung ein Verfahren zur Herstellung eines derartigen Reflektors.

Die Herstellung von transparenten, aus Polysiloxanen bestehenden in Sol-Gel-Pro-zessen gebildeten Schichten, in die auch nanoskalige Teilchen eingebunden werden können, ist bekannt. So wird in dem Buch von Stefan Sepeur "Nanotechnologie: Grundlagen und Anwendungen", Hannover, Vincentz-Netzwerk, 2008 auf den Seiten 102 bis 106 die Herstellung von Beschichtungswerkstoffen mit guter Korrosions- und Bewitterungsbeständigkeit beschrieben. Diese Werkstoffe werden durch Polykondensation von organischen, epoxyfunktionellen Harzen, insbesondere von 3-Glycidoxypropyltrimethoxysilan (GPTMS), mit Bisphenol A und I-Methylimidazol gewonnen. Es wird jedoch ausgeführt, dass die Abrieb- und Kratzbeständigkeit von derartigen Schichten oftmals zu wünschen übrig lässt.

Die DE 298 12 559 U1 beschreibt ein Verbundmaterial mit einem Träger aus Aluminium, auf den ein optisch wirksames Mehrschichtsystem aufgebracht ist, auf dem sich wiederum eine außenliegende Schutzschicht befindet. Diese Schutzschicht kann aus Siliciumdioxid oder in einer Ausführungsform aus einer auf der Basis eines Sol-Gel-Prozesses hergestellten Zusammensetzung, vorzugsweise aus einem organisch modifizierten anorganischen Silicatnetzwerk, bestehen. Das Netzwerk kann unter Einsatz von hydrolisierbaren Silanen, insbesondere Siloxanen, gebildet sein, aus denen durch Hydrolyse und Kondensation zu Polysiloxan unter Abspaltung von Alkohol bzw. Wasser eine als Sol auf das optische Mehrschichtsystem auftragbare kolloidale Lösung entsteht. Eine konkrete Rezeptur zur Herstellung der Siloxanschicht wird jedoch nicht angegeben.

Die EP 1 287 389 B1 beschreibt einen Reflektor der eingangs genannten Art, insbesondere mit einem Reflektorkörper aus Aluminium oder aus einer Aluminiumlegierung. In dem genannten Dokument wird ausgeführt, dass es allgemein bekannt sei, Bänder in Glänzwerkstoffen, z. B. Reinaluminium, Reinstaluminium oder AlMg-Legierungen auf Basis von Aluminium mit einem Reinheitsgrad von 99,5 Prozent und größer herzustellen, die je nach Anwendung diffuse oder gerichtete Lichtreflexion erzeugen. Hierbei ist es auch bekannt, zur Erhöhung der gerichteten Reflexion die Oberflächen von solchen Bändern chemisch oder elektrolytisch zu glänzen und anschließen durch anodische Oxidation eine Schutzschicht von z. B. 2 - 10 µm Schichtdicke zu erzeugen. Die EP 1 287 389 B1 nennt dabei das Problem, dass solche Reflektoren.in der freien Bewitterung oftmals eine beschränkte Lebensdauer aufweisen. Feuchtigkeit im Zusammenwirken mit UV-Strahlung oder CO₂, SO₂ oder anderen Schadstoffen führen zur Minderung der Reflexionswerte, insbesondere zu einer Reduktion des Glanzes bzw. der Gesamtreflexion. Es sollte daher mit dem im genannten Dokument beschriebenen Gegenstand ein Reflektor geschaffen werden, dessen reflektierende Seite witterungs- und korrosionsbeständig sowie gegen mechanische Einflüsse beständig und gut zu reinigen ist. Dabei sollte die Herstellung in einem kontinuierlichen Fertigungsverfahren möglich sein. Bei dem zur Lösung dieses Problems beschriebenen bekannten Reflektor ist eine außenliegende abschließende transparente Schutzschicht mit einer Dicke von mehr als 1 µm vorgesehen, die aus einem Sol-Gel-Lack gebildet ist: Die reflektierende Oberfläche des Reflektors weist eine Rauheit Ra (bestimmt nach DIN 4761 bis DIN 4768) unter 0,1 µm auf, und der Sol-Gel-Lack ist aus einem Polysiloxan hergestellt, welches aus einer alkoholischen Silan-Lösung und einer wässrigen kolloidalen Kieselsäure-Lösung hergestellt ist. Der Reflektor weist bei einem 2000-Stunden-QUV-Test nach ASTM G 53-96 Einbußen in der Gesamtreflexion und im Glanz von weniger als 5 Prozent auf. Es hat sich allerdings gezeigt, dass derartige Sol-Gel-Lacke in technologisch nachteiliger Weise eine nur relativ geringe Topfzeit aufweisen.

Die WO2007059883 stellt auch einen Reflektor des Stands der Technik dar.

Die Topfzeit beschreibt die Zeit, in der eine unproblematische Verarbeitbarkeit von Materialien gewährleistet ist. Es ist die Zeit zwischen dem Anmischen einer mehrkomponentigen Substanz und dem Ende ihrer Verarbeitbarkeit gemeint. Meist zeigt sich das Ende der Topfzeit durch deutliche Eigenschaftsänderungen, wie z. B. durch einen Viskositätsanstieg, der eine weitere Verarbeitung verhindert. Sol-Gel-Systeme, wie die hier beschriebenen, setzen sich bereits nach der Hydrolyse, d. h. nach der Zugabe von Säure, um, so dass die Polymerbildung bereits im "Topf', also dem Reaktionsgefäß, beginnt.

Der Erfindung liegt die Aufgabe zugrunde, einen Reflektor der eingangs genannten Art und ein Verfahren zu seiner Herstellung zu schaffen, wobei bei Verbesserung der bekannten vorteilhaften Reflektoreigenschaften, wie der Resistenz gegen Witterungsund Korrosionseinflüsse, der Beständigkeit gegen mechanische Einflüsse, der Reinigungsfähigkeit und der Möglichkeit der Herstellung in einem kontinuierlichen Fertigurigsverfahren, der Reflektor auf technologisch vorteilhaftere Weise herstellbar ist.

Diese Aufgabe wird erfindungsgemäß dadurch gelöst, dass die Deckschicht aus einem vernetzten Polykondensationsprodukt mindestens eines Kieselsäureesters und mindestens eines zyklischen, Alkyl-, Vinyl- und/oder Arylgruppen enthaltenden Siloxan-Oligomers besteht bzw. verfahrensgemäß durch Polykondensation dieser Reaktanden gebildet wird.

Unter Kieselsäureestern werden dabei insbesondere die Ester der Orthokieselsäure mit der allgemeinen Formel Si(OR)₄ verstanden, wobei im Molekül R Aryl- und/oder insbesondere eine Alkylgruppen sein können. Diese Verbindungen entstehen durch Reaktion von Siliciumhalogeniden - z. B. Siliciumtetrachlorid - mit Alkoholen, wie z. B. Methanol und Ethanol. Bei der Reaktion mit Methanol entsteht Kieselsäuretetramethylester, auch Tetramethylorthosilicat - kurz TMOS - genannt, als farblose Flüssigkeit. Bei der Reaktion mit Ethanol entsteht Kieselsäuretetraethylester, auch Tetraethylorthosilicat - kurz TEOS - genannt. Es wurde gefunden, dass insbesondere die letztgenannte Verbindung im Verein mit einem zyklischen, Alkyl- und/oder Arylgruppen enthaltenden Siloxan-Oligomer eine besondere Eignung zur Bildung der Deckschicht des erfindungsgemäßen Reflektors aufweist. Hierbei ist es bevorzugt, wenn in die Ringstruktur des zyklischen Siloxan-Oligomers nicht mehr als sieben, vorzugsweise vier, Monomerbausteine eingebunden sind. Unter einem Monomerbaustein wird dabei die kleinste jeweils aus einem Monomer gebildete Struktureinheit im Ring verstanden. Außerdem ist im Oligomer die Präsenz von einer bis acht Alkyl- und/oder Vinylgruppen mit jeweils ein bis sechs Kohlenstoffatomen bevorzugt. Dadurch können bei der Kondensation optimale Vernetzungsverhältnisse in der Deckschicht erreicht werden, durch die ein optimales Härte-Elastizitäts-Verhältnis eingestellt werden kann.

Im Unterschied zu der eingeschränkten Topfzeit des bekannten Schutzlackes gemäß der EP 1 287 389 B1 von etwa 70 Stunden sind erfindungsgemäß mit den Lacken, die die cyclischen Carbosiloxane enthalten, mehr als 155 Stunden Topfzeit möglich. Die Applikation der Lacke kann dabei mit unterschiedlichen Verfahren, wie Gießen, Tauchen, Walzenantrag, Sprühen, Rakeln oder Streichen im kontinuierlichen, oder - wie beim Spin-Coating - im nicht kontinuierlichen Betrieb erfolgen.

Für den erfindungsgemäßen Reflektor kann durch die Deckschicht eine extreme Langlebigkeit gewährleistet werden, die sich beispielsweise darin ausdrückt, dass der Reflektor nach 2000 Stunden, vorzugsweise sogar nach 3000 Stunden, im neutralen Salzsprühnebeltest nach DIN EN ISO 9227 NSS noch keine Korrosionserscheinungen zeigt. Des Weiteren ist die Oberfläche der Deckschicht mit üblichen Verfahren, wie z. B. dem Einsatz einer weichen Bürste und fließendem Wasser, leicht zu reinigen und wird durch Anwendung von derartigen Standardreinigungsverfahren nicht beschädigt.

Der Reflektorkörper kann aus Aluminium, Magnesium, Kupfer, Titan, Molybdän, Tantal oder Stahl, wie beispielsweise Edelstahl, oder aus Legierungen mit diesen Stoffen, wie beispielsweise Messing, bestehen. Unmittelbar auf dem Reflektorkörper kann eine insbesondere durch Chromatieren, Phosphatieren, Anodisieren, Verzinken o. ä. hergestellte Grundschicht aufgebracht sein. Vorher kann der Reflektorkörper zur Reinigung, insbesondere zur Entfettung, nass- und/oder plasmachemisch vorbehandelt sein.

Unter der Deckschicht - unmittelbar auf dem Reflektorkörper oder auf der Grundschicht - kann sich, insbesondere als funktionelles Schichtpaket, ein Schichtsystem mit optischer und/oder mechanischer Funktion befinden. Ein solches Schichtpaket kann mit Vorteil in einem kontinuierlichen Vakuum-Bandbeschichtungsprozess aufgebracht sein.

Beispielsweise kann ein optisches Schichtsystem aus zwei, drei - oder auch mehr - Schichten bestehen, wobei mindestens die obere Schicht eine dielektrische Schicht ist und die unterste Schicht eine metallische, insbesondere aus Aluminium bestehende, Schicht ist, welche die Reflexionsschicht bildet. Das Material der darüber liegenden Schichten kann chemisch der Gruppe der Metalloxide, -fluoride, -nitride oder -sulfide oder deren Mischungen zugehörig sein, wobei die Schichten unterschiedliche Brechungsindizes aufweisen. So kann eine Differenz der Brechungsindizes - bezogen auf eine Wellenlänge von 550 nm - beispielsweise größer als 0,10, bevorzugt größer als 0,20, sein.

Die Deckschicht minimiert den direkten korrosiven Angriff aus der Umgebung auf die darunter liegenden Schichten. Dadurch, dass sich die auf dem erfindungsgemäßen Reflektor befindende Deckschicht auch durch eine hohe solare gerichtete Transmission auszeichnet, bleiben so vorteilhafterweise z. B. auch die erwünschten optischen Eigenschaften des darunter liegenden funktionellen Schichtpakets erhalten.

Eine hervorragende Haftung, auch bei größeren Dicken der Deckschicht, wobei diese dabei eine hohe Elastizität und hinreichende Härte aufweist, ist zu erreichen, wenn eine unmittelbar unter der Deckschicht liegende dielektrische Schicht eine Titandioxidschicht, insbesondere eine in einem PVD-Verfahren aufgebrachte Titandioxidschicht, ist. Alternativ empfehlen sich diesbezüglich u. a. auch Nb₂O₅ und Ta₂O₅.

Vorzugsweise erfolgt die Applikation der Deckschicht und der gegebenenfalls vorzusehenden anderen Schichten auf ein Metallband als Reflektorkörper,kontinuierlich mittels einer Vakuumbeschichtung. Der erfindungsgemäße Reflektor kann somit eine Ausbildung als Coil - insbesondere mit einer Breite bis zu 1400 mm, vorzugsweise bis zu 1600 mm, und mit einer Dicke im Bereich von etwa 0,10 mm bis 1,5 mm, vorzugsweise im Bereich von 0,3 bis 1,0 mm - aufweisen. Ein derartiger erfindungsgemäßer Reflektor aus Metallband, Grundschicht, funktionellem Schichtpaket und Deckschicht ist dabei verformbar, ohne dass die optischen, mechanischen und chemischen Materialeigenschaften beeinträchtigt werden.

Weitere vorteilhafte Ausführungen der Erfindung sind in den Unteransprüchen und in der nachfolgenden detaillierten Beschreibung enthalten.

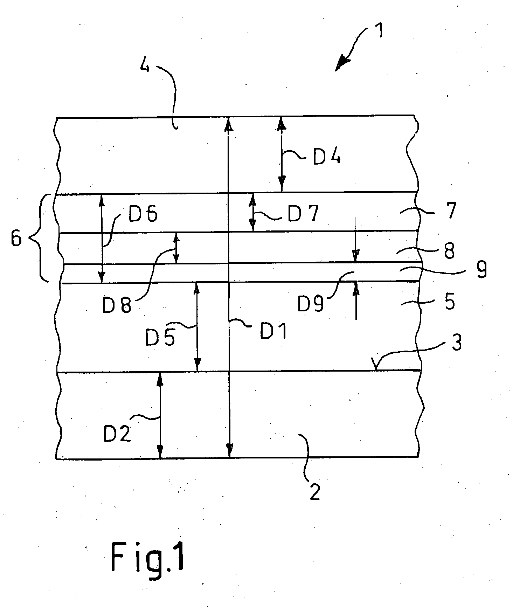

Anhand eines durch die beiliegende Zeichnung veranschaulichten Ausführungsbeispiels wird die Erfindung näher erläutert. Dabei zeigt Fig. 1 eine prinzipielle Schnittdarstellung durch einen erfindungsgemäßen Reflektor.

Der erfindungsgemäße Reflektor 1 dient zur Reflexion optischer Strahlung - also elektromagnetischer Strahlung im Wellenlängenbereich von 100 nm bis 1 mm. In einer Ausbildung als Coil kann der Reflektor 1 eine Dicke D1 im Bereich von etwa 0,02 mm bis 1,6 mm aufweisen. Der Reflektor 1 weist einen metallischen Reflektorkörper 2 auf, dessen Oberfläche 3 reflektierend wirkt. Alternativ kann auf dem Reflektorkörper 2 auch eine Reflexionsschicht 9 abgeschieden sein, wie dies nachstehend noch im Detail ausgeführt wird.

Der Reflektorkörper 2 kann - wie bereits erwähnt - aus Aluminium, Magnesium, Kupfer, Titan, Molybdän, Chrom, Nickel, Tantal oder Stahl, wie beispielsweise Edelstahl, oder aus Legierungen mit diesen Stoffen, wie beispielsweise aus einer AIMg-Legierung oder aus Messing, bestehen. Beispielsweise kann es sich bei dem Reflektorkörper 2 um ein bandförmiges Aluminiumblech Al 98,3 (Reinheit 98,3 Prozent) mit einer Dicke D2 von 0,5 mm handeln. Die Mindestdicke D2 eines solchen Bleches kann bei 20 µm liegen, während die obere Grenze der Dicke D2 etwa bei 1,5 mm liegen kann.

Der Reflektor 1 weist eine transparente, aus Polysiloxan bestehende Deckschicht 4 auf, die in einem Sol-Gel-Prozess gebildet ist. Die Deckschicht 4 kann eine Dicke D4 im Bereich von 0,5 bis 40 µm, vorzugsweise im Bereich von 1 bis 10 µm, aufweisen. Des Weiteren ist es bevorzugt, wenn die Oberfläche der Grundschicht 5 oder des Reflektorkörpers 2 - je nachdem, worauf die Deckschicht 4 aufgebracht wirt - einen arithmetischen Mittenrauhwert Rₐ im Bereich von weniger als 0,05 µm, insbesondere von weniger als 0,01 µm, besonders bevorzugt von weniger als 0,005 pm, aufweist. Dabei ist es möglich, dass ein nach DIN 5036 bestimmter Licht-Gesamtreflexionsgrad des erfindungsgemäßen Reflektors 1 eingestellt wird, der mindestens 95 Prozent beträgt. Außerdem ist es auch möglich, dass ein nach DIN 5036 bestimmter diffuser Licht-Reflexionsgrad eingestellt wird, der im Bereich bis 95 Prozent liegt.

Die Deckschicht 4 besteht erfindungsgemäß aus einem vernetzten Kondensationsprodukt mindestens eines Kieselsäureesters und mindestens eines zyklischen, Alkyl-, Vinyl- und/oder Arylgruppen enthaltenden Siloxan-Oligomers. Hierzu werden nachfolgend noch spezielle Rezepturen und Herstellungsmöglichkeiten angegeben.

Bei den übrigen in der Zeichnung dargestellten Schichten handelt es sich um optional vorhandene Schichten.

Es kann z. B. - unmittelbar auf dem Reflektorkörper 2 - eine durch Chromatieren, Phosphatieren, Anodisieren, Verzinken o. ä. hergestellte Grundschicht 5 aufgebracht sein. Bevorzugt kann eine solche Grundschicht 5 aus anodisch oxidiertem oder elektrolytisch geglänztem und anodisch oxidiertem Aluminium bestehen, das aus dem Material des Reflektorkörpers 2 gebildet ist. Sie kann auf nasschemischem Weg erzeugt werden, wobei die Poren der Aluminiumoxidschicht in der letzten Phase der Prozesskette weitestgehend durch eine Heißverdichtung verschlossen werden können, so dass eine dauerhaft beständige Oberfläche entsteht. Die Grundschicht 5 kann auch aus mehreren Teilschichten bestehen. Sie kann einerseits als sogenannte Vorbehandlungsschicht mit der Funktion der Erzeugung einer Haftungvermittlung und Glättung des Untergrundes für die darüber liegenden Schichten dienen, aber andererseits auch als elektrochemische Barriereschicht oder als Schicht mit optischer Funktion. Die Grundschicht 5 kann eine minimale Dicke D5 von 1 nm, insbesondere von 20 nm, vorzugsweise von 50 nm und besonders bevorzugt von 100 nm aufweisen. Die maximale Dicke D5 der Grundschicht 5 liegt beispielsweise bei 5000 nm, vorzugsweise bei 1500 nm, und besonders bevorzugt bei 300 nm.

Unmittelbar unter der Deckschicht 4 ist - wie der Zeichnung zu entnehmen ist - als funktionelles Schichtpaket 6 exemplarisch ein optisches Schichtsystem auf den Reflektorkörper 2 aufgebracht. Ein solches Schichtsystem kann in technologisch vorteilhafter Weise unter Anwendung eines kontinuierlichen Vakuum-Bandbeschichtungsprozesses appliziert werden.

Wie dargestellt, kann ein solches optisches Schichtsystem z. B. mindestens aus zwei Schichten 7,8, typischerweise aus drei Schichten 7, 8, 9 bestehen, wobei die beiden oberen Schichten 7, 8 dielektrische Schichten sind, und die unterste Schicht eine metallische, insbesondere aus Aluminium bestehende Schicht ist, welche, wenn die Oberfläche 3 des Reflektorkörpers 2 nicht zur Reflexion vorgesehen ist, dann eine Reflexionsschicht 9 bildet. Die jeweilige optische Dicke D7, D8 der oberen und der mittleren Schicht 7, 8 des optischen Schichtsystems 6 sollte - damit die Schichten 7, 8 als reflexionserhöhende Interferenzschichten wirken können - so bemessen sein, dass sie etwa ein Viertel der Mittenwellenlänge des Spektralbereiches der zu reflektierenden elektromagnetischen Strahlung beträgt.

Eine Reflexionsschicht 9 kann aber auch unabhängig vom Vorhandensein einer oder mehrerer darüber liegender dielektrischer Schichten 7, 8 vorgesehen sein. Die metallische Reflexionsschicht 9 kann dabei mit Vorteil eine Sputterschicht oder eine durch Verdampfen, insbesondere durch Elektronenbombardement oder aus thermischen Quellen, erzeugte Schicht sein. Die Dicke D9 der Reflexionsschicht 9 kann im Bereich von 10 nm bis 200 nm liegen. Die Schicht 9 kann aus Aluminium, Silber, Kupfer, Gold, Chrom, Nickel und/oder deren Legierungen bestehen und auch aus Teilschichten gebildet sein.

Das Reflexionsvermögen wird erhöht, wenn die unmittelbar unter der Deckschicht 4 liegende oberste Schicht 7 des funktionellen Schichtpaketes 6 aus einem hochbrechenden Material, wie Al₂O₃, ZrO₂, HfO_{2,} Nb₂O₅, Ta₂O₅ oder bevorzugt TiO₂, und die darunter liegende Schicht 8 aus einem niedrigbrechenden Material, wie SiO₂, besteht.

Eine besonders gute Haftung der Deckschicht 4 wird erreicht, wenn die unmittelbar unter der Deckschicht 4 liegende dielektrische Schicht 7 eine insbesondere in einem PVD-Verfahren aufgebrachte Titandioxidschicht ist, da eine solche Schicht bei der Kondensation des Kieselsäureesters und des zyklischen, Alkyl-, Vinyl- und/oder Arylgruppen enthaltenden Siloxan-Oligomers ebenfalls als Reaktionspartner auftritt, so - dass die Deckschicht 4 und die dielektrische Schicht 7 nicht nur adhäsiv, sondern auch chemisch, vorzugsweise durch ein interpenetrierendes Netzwerk, aneinander gebunden sind.

Proben von drei erfindungsgemäßen Reflektoren 1 wurden in Gegenüberstellung mit einer Vergleichsprobe hergestellt. Es wurden jeweils die Topfzeit und der diffuse Reflexionsgrad nach DIN 5036-3 bestimmt sowie der Wischtest nach DIN ISO 9211-4 und der sogenannte ΔT-Test durchgeführt.

Die Verarbeitkeit von Sol-Gel-Lacken für Reflektoren kann durch das Zahlenverhältnis der diffusen Reflexion (rho-d) zur Lichtgesamtreflexion (rho) an fertig prozessierten planen Proben ermittelt werden (DIN 5036-3 "Strahlungsphysikalische und lichttechnische Eigenschaften von Materialien, Messverfahren für lichttechnische und spektrale strahlungsphysikalische Kennzahlen"). Die Bestimmung wurde wie folgt durchgeführt. Direkt nach Herstellung der Sol-Gel-Lacke in einem Takt von Vielfachen von 24 Stunden wurde eine Beschichtung auf ein eloxiertes Aluminiumblech aus der Legierung EN AW 1085 gemäß der Norm EN 573-3 (Al 99,85) durch Tauchbeschichtung mit etwa 3 µm Trockendicke und 3-minütigem Aushärten bei 200 °C durchgeführt. Nach der Aushärtung der Beschichtung und Abkühlen der Probe auf Raumtemperatur wurden unter Zuhilfenahme einer Ulbricht'schen Kugel die Reflexionsgrade der Lichtgesamtreflexion (rho) und der diffusen Reflexion (rho-d) ermittelt. Während die Lichtgesamtreflexion (rho) sich nicht verändert, steigt die diffuse Reflexion der beschichteten Probe in Abhängigkeit der Lagerzeit des Sol-Gel-Lackes an. Eine Trübung der Beschichtung wird visuell wahrgenommen, wenn der Quotient aus rho-d und rho den Wert 0,20 überschreitet.

Der ΔT-Test wird in Anlehnung an die DIN 50 928 Abschnitt 9.5 durchgeführt. Eine kreisrunde Probe mit einem Durchmesser von 118 mm wird in einer Halterung fixiert. Mit Hilfe von Pumpen wird die Probenvorderseite mit 42 °C warmem Wasser umspült, während die Rückseite 35 °C warmem Wasser ausgesetzt wird. Die Dauer der Belastung beträgt 168 Stunden. Nach der Belastung wird visuell geprüft, ob es zu einer Lackenthaftung gekommen ist.

Außerdem werden Tesa-Abzugsversuche mit und ohne Gitterschnitt nach DIN 2409 durchgeführt. Hierbei wird bewertet, ob flächige Enthaftungen auftreten oder ob es am Gitterschnitt zu einer Enthaftung durch den Tesaabzug kommt.

### Vergleichsbeispiel:

Es wurden 10 ml 3-Glycidoxypropyltrimethoxysilan (GPTMS) durch Zugabe von 1,222 ml 0,1-molarer Salzsäure und einstündiges Rühren bei Raumtemperatur hydrolysiert. Danach wurden 2,95 g Bisphenol A in dem gebildeten GPTMS-Sol gelöst und 7,02 ml Nanopol ® C 764 Dispersion zugegeben.

Nanopol ® C-Produkte sind kolloidale Kieselsäure-Sole in Lösemitteln und werden von der Fa. nanoresins AG, Geesthacht hergestellt. Diese Produkte sind niedrigviskos und weisen keinerlei Sedimentation auf, d. h. die Verarbeitbarkeit bleibt im Vergleich zum jeweiligen Basisharz weitgehend unverändert. Die Nanopartikel werden in einem modifizierten Sol-Gel-Prozess hergestellt. Die disperse Phase von Nanopol ® C besteht aus kugelförmigen, oberflächenmodifizierten SiO₂-Nanopartikeln mit mittleren Durchmessern von 20 nm und einer extrem schmalen Partikelgrößenverteilung (ca. ± 10 nm). Nanopol ® C 764 enthält in Methoxypropylacetat dispergiert 50 Masseprozent SiO₂-Nanopartikel und weist bei 25 EC eine dynamische Viskosität von 20 mPa*s auf.

Als Katalysator für die Polykondensation wurden 160 µl Methylimidazol pro 10 ml GPTMS zugegeben.

Der entstandene Lack wurde durch Tauchbeschichtung auf einen Träger appliziert. Für alle Beispiele wurde als Träger bzw. als Reflektorkörper 1 ein eloxiertes Aluminiumblech mit der Bezeichnung EN AW 1085 gemäß der Norm EN 573-3 (Al 99,85) eingesetzt. Auf dem Reflektorkörper 2 befand sich also jeweils eine Grundschicht 5 aus Al₂O₃, die insbesondere eine Dicke von 2 µm aufweisen kann.

Danach erfolgte bei 200 EC und einer Dauer im Bereich von 5 bis 10 Minuten eine Trocknung und Härtung in einem Durchlaufofen.

Für die Deckschicht konnten dadurch Schichtdicken im Bereich von 4,1 ∀ 3,4 µm eingestellt werden, wobei ein diffuser Reflexionsgrad rho-d nach DIN 5036-3 von 13,8 Prozent bestimmt wurde. Obwohl der Wischtest nach DIN ISO 9211-4 bestanden wurde (50 H-1), zeigte der ΔT-Test einen Ausfall des Reflektors an. Es war eine Delamination der Deckschicht festzustellen.

### Erstes erfindungsgemäßes Beispiel:

Es wurden 0,745 g eines zyklischen Polysiloxans der chemischen Formel Cyclo-{SiO(CH₃)[CH₂CH₂Si(CH₃)(OC₂H₅)₂₁}₄ mit 14,7 g Tetraethoxysilan (TEOS) in einer alkoholischen Lösung aus 7,7 g Ethanol und 23,2 g 2-Butanol bei Zugabe von 2,4 ml 0,1-molarer Salzsäure unter 30-minütigem Rühren, bei weiterer Zugabe von 2,4 ml 0,1-molarer Salzsäure unter 60-minütigem Rühren und bei abschließender Zugabe von 1,2 ml 2,5 prozentiger Essigsäure unter 60-minütigem Rühren bei Raumtemperatur mineinander zur Reaktion gebracht.

Der entstandene Lack wurde durch Tauchbeschichtung auf einen Reflektorkörper 2 appliziert.

Danach erfolgte bei 200 EC bei einer Dauer im Bereich von 5 bis 7 Minuten eine Trocknung und Aushärtung in einem Durchlaufofen, wobei die Deckschicht 4 gebildet wurde. Dabei bildet sich als Gel ein dreidimensionales Organosiloxan-Netzwerk, in dem die cyclische Komponente insbesondere eine Erhöhung der Flexibilität bewirkt.

Für die Deckschicht 4 konnten dadurch Schichtdicken D4 im Bereich von 1,5 ∀ 0,4 µm eingestellt werden. Die Rauigkeiten lagen für den arithmetischen Mittenrauwert Rₐ bei 5,3 ± 0,3 nm und für die mittlere Rauheit R_{z} bei 38,3 ± 3,0 nm, wobei ein diffuser Reflexionsgrad nach DIN 5036-3 von 8,5 Prozent bestimmt wurde. Sowohl der Wischtest nach DIN ISO 9211-4 (50 H-1), als auch der ΔT-Test wurden bestanden. Es war keine Delamination der Deckschicht 4 festzustellen.

### Zweites erfindungsemäßes Beispiel:

Es wurden 14,4 ml Methacryloxypropyltrimethoxysilan (MAOPTMS) mit 10,8 ml Tetra-ethoxysilan (TEOS) und 5,4 ml 1,3,5,7-Tetravinyl-1,3,5,7-tetramethylcyclotetrasiloxan (VINYL-D4) durch Zugabe von 26,6 ml Isopropanol in eine alkoholische Lösung gebracht. Dann wurden unter Rühren 4,5 ml vollentsalztes Wasser mit 22 µl 85-prozentiger Phosphorsäure zugetropft. Unter sechsstündigem Rühren erfolgte dann eine Hydrolyse.

Abschließend erfolgte eine Zugabe von 1 Volumenprozent Di-tert-butylperoxid und TEGO ® Glide 410.

Bei TEGO ® Glide 410 handelt es sich um ein Polyethersiloxan-Copolymer, welches als Gleit- und Verlaufsadditiv von der Fa. Evonik Tego Chemie GmbH, Essen als Flüssigkeit mit einem nichtflüchtigen Anteil von ca. 92 Masseprozent und einer dynami-, schen Viskosität bei 25 °C von ca. 2000 mPa*s vertrieben wird. Dieses Additiv stellt die Oberflächenspannung eines trocknenden Lackes auf ein gleichmäßiges niedriges Niveau ein. Dabei nivelliert es Unterschiede in der Oberflächenspannung, so dass der Materialfluss von Bereichen mit niedriger Oberflächenspannung zu Bereichen mit höherer Oberflächenspannung minimiert und Wirbelbildung unterdrückt wird. Der Lackfilm trocknet sehr homogen und zeigt dadurch einen wesentlich besseren Verlauf, wobei darunter nach DIN 55945 die Eigenschaft von Lacken verstanden wir, Unebenheiten, die durch Spritznebel, Pinselstriche usw. entstanden sind, nach der Applikation selbsttätig auszugleichen.

Der entstandene Lack wurde durch Tauchbeschichtung auf einen Reflektorkörper 2 appliziert. Danach erfolgte bei 200 EC bei einer Dauer im Bereich von etwa 5 Minuten eine Trocknung und Aushärtung in einem Durchlaufofen, wobei die Deckschicht 4 gebildet wurde. Zusätzlich konnte zur Einstellung eines höheren Vernetzungsgrades vor oder nach der thermischen Härtung eine Bestrahlung mit UV-Licht eingesetzt werden.

Für die Deckschicht 4 konnten dadurch Schichtdicken D4 im Bereich von 2,2 ∀ 0,3 µm eingestellt werden, wobei ein diffuser Reflexionsgrad nach DIN 5036-3 von 13,9 Prozent bestimmt wurde. Sowohl der Wischtest nach DIN ISO 9211-4 (50 H-1), als auch der ∀T-Test wurden bestanden. Es war keine Delamination der Deckschicht 4 festzustellen.

Es hat sich gezeigt, dass je nach Zusammensetzung und Schichtdicke D4 der Deckschicht 4 Trocknungszeiten im Bereich von 1 min bis 60 min, vorzugsweise im Bereich von 3 min bis 5 min, zweckmäßig sind. Als bevorzugte Behandlungstemperatur ist eine im Bereich von 150 °C bis 300 °C, optimalerweise im Bereich von 180 °C bis 250 °C, anzusehen.

### Drittes erfindungsgemäßes Beispiel:

Es wurden 60,0 ml Methacryloxypropyltrimethoxysilan (MAOPTMS) mit 10,0 ml Tetraethoxysilan (TEOS) und 10,0 ml 1,3,5,7-Tetravinyl-1,3,5,7-tetramethylcyclotetrasiloxan (VINYL-D4) durch Zugabe von 50,0 ml Isopropanol in eine alkoholische Lösung gebracht. Dann wurden unter Rühren 1 - 2 ml 0,1 -molare Salzsäure zur Hydrolyse zugegeben. Unter weiterem zwölfstündigem Rühren erfolgte dann eine Hydrolyse.

Abschließend erfolgte eine Zugabe von 1 Volumenprozent eines Fotoinitiators (z. B. eines α-Hydroxyketons, wie Irgacure ® 184 oder Irgacure ® 1173 der Fa. Ciba). Danach war zur Bildung der Deckschicht 4 eine Vernetzung durch UV-Licht mittels eines Quecksilberstrahlers möglich. Die Durchlaufgeschwindigkeit kann dabei bei einer UV-Dosis im Bereich von 100 mJ/cm² bis 500 mJ/cm² im Bereich von etwa 10 bis 25 m/min liegen.

Für die Deckschicht 4 können dadurch Schichtdicken D4 im Bereich von 2,5 ∀ 0,4 µm und diffuse Reflexionsgrade nach DIN 5036-3 im Bereich von 8,2 bis 12,7 Prozent eingestellt werden. Der Wischtest nach DIN ISO 9211-4 (50 H-1) und der ΔT-Test werden bestanden.

Für die erfindungsgemäßen Reflektoren 1 wurden bei gegenüber dem Vergleichsbeispiel nahezu identischen optischen Eigenschaften wesentlich bessere Korrosionsbeständigkeiten festgestellt. Diese lagen erfindungsgemäß - gemessen an der Häufigkeit in der Fläche auftretender Defekte im Salzsprühnebeltest nach DIN EN ISO 9227 NSS - bei über 2000 h und damit etwa doppelt so hoch, wie für das Vergleichsbeispiel bzw. auch wie für einen Reflektor gemäß der EP 1 287 389 B1. In der Außenbewitterung - Freibewitterung in mediterranem Meerwasserklima - entspricht dies einer Lebensdauer von mehr als zwölf Monaten.

Durch die oben beschriebene Methode zur Bestimmung der Verarbeitbarkeit konnte für das "erste erfindungsgemäße Beispiel" eine Verarbeitungszeit von etwa 300 Stunden bestimmt werden. Im Unterschied dazu ließ sich für den bekannten Schutzlack gemäß der EP 1 287 389 B1 nur eine Verarbeitungszeit von maximal etwa 70 Stunden ermitteln, wobei der Hersteller eine Haltbarkeit von 48 Stunden nach Herstellung angibt.

Um mit noch höherer Sicherheit eine visuelle Trübung zu unterbinden, sollte der Quotient aus rho-d (diffuse Reflexion) und rho (Gesamtreflexion) den Wert 0,15 nicht überschreiten. Wurde dies zu Grunde gelegt, so konnte mit dem "ersten erfindungsgemäßen Beispiel" eine Verarbeitungszeit von etwa 155 Stunden definiert werden, während der Wert von 0,15 bei dem aus der EP 1 287 389 B1 bekannten Schutzlack ebenfalls bereits nach 70 Stunden erreicht wurde. Auch für das "Vergleichsbeispiel" wurden nur Werte unter 90 Stunden erreicht.

Die vorliegend Erfindung ist nicht auf das dargestellte Ausführungsbeispiel beschränkt, sondern umfasst alle im Sinne der Erfindung gleichwirkenden Mittel und Maßnahmen. So ist es beispielsweise auch möglich, zur Bildung der Deckschicht 4 Kieselsäureester einzusetzen, die eine andere allgemeine Formeln aufweisen als die oben genannte Formel Si(OR)₄, in der R eine Aryl- oder Alkylgruppe ist. Dabei können beispielsweise eine oder mehr der OR-Gruppen durch andere Gruppen ersetzt sein, wie dies beim GPTMS oder MAOPTMS der Fall ist.

Wie schon erwähnt können außer den Monomerbausteinen der Ausführungsbeispiele -SiO(CH₃)[CH₂CH₂Si(CH₃)(OC₂H₅)₂]- und -SiO(CH₃)- in den Ringen der zyklischen Siloxane auch andere Monomerbausteine - und auch mit anderer Anzahl im Ring - zur Anwendung kommen.

Des Weiteren kann der Fachmann die Erfindung durch zusätzliche vorteilhafte Maßnahmen ergänzen, ohne dass der Rahmen der Erfindung verlassen wird. So sollte idealerweise die Lackrezeptur immer in Kontakt mit einer Oberfläche 3 konstanter Oberflächenenergie gebracht werden. Zu diesem Zweck bestehen neben dem beschriebenen Einsatz eines Verlaufsmittels vielfältige Möglichkeiten, um mit geeigneten Verfahren reproduzierbare Bedingungen zu schaffen. So kann der Reflektorkörper 2 vor der Applikation, z. B. über eine Flamm-Pyrolyse, eine Corona- oder Plasmabehandlung oder deren Kombinationen, zur Einstellung einer konstanten freien Oberflächenenergie des Bandes aktiviert werden. Außerdem kann auch ein Kühlen oder Erwärmen des Reflektorkörpers 2 vor und/oder während und/oder nach der Applikation der Deckschicht 4 und/oder der Trocknung erfolgen.

Die Trocknung und Härtung des Lackes der Deckschicht 4 nach der Applikation kann - wie bereits aus den vorstehenden Ausführungen hervorgeht - abhängig u. a. von der speziellen Ausgestaltung des Lackes durch unterschiedliche Arten von Energieeintrag erfolgen, so z. B. durch Absorption von optischer Strahlung, sei es poly- oder monochromatisch, beispielsweise mittels Laser, und/oder durch Wärmeleitung, Konvektion, Elektronenstrahlung und/oder durch Induktionsheizung des Reflektorkörpers 2 und/oder durch elektromagnetische Strahlung außerhalb des optischen Spektrums. Vor- und/oder nachgeschaltet werden können spezielle Konditionierungen der Umgebungsbedingungen, wie z.B. Feuchte, Inertisierung, Unter- oder Überdruck. Auch kann die Trocknung/Vernetzung insgesamt in inerten Atmosphären erfolgen.

Ein Upscaling aller exemplarisch angegebenen Behandlungen auf Technikumsmaßstab stellt kein Problem dar.

Ferner ist die Erfindung nicht auf die in den unabhängigen Ansprüchen 1 und 25 definierten Merkmalskombinationen beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal der Ansprüche 1 und 25 weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

### Bezugszeichen

- 1: Reflektor
- 2: Reflektorkörper von 1
- 3: Oberfläche von 2
- 4: Deckschicht
- 5: Grundschicht
- 6: funktionelles Schichtpaket, speziell optisches Schichtsystem
- 7: oberste Schicht von 6
- 8: mittlere Schicht von 6
- 9: unterste Schicht von 6, Reflexionsschicht

- D1: Dicke von 1
- D2: Dicke von 2
- D4: Dicke von 4
- D5: Dicke von 5
- D6: Dicke von 6
- D7: Dicke von 7
- D8: Dicke von 8
- D9: Dicke von 9

## Patentansprüche

1. Reflektor (1) für elektromagnetische Strahlung im Wellenlängenbereich von 100 nm bis 1 mm, mit hoher Resistenz gegen Witterungs- und Korrosionseinflüsse, umfassend
- einen metallischen Reflektorkörper (2), der eine reflektierende Oberfläche (3) aufweist,
- oder einen Reflektorkörper (2), auf dem eine Reflexionsschicht (9) abgeschieden ist,
- und eine transparente, aus Polysiloxan bestehende Deckschicht (4), die in einem Sol-Gel-Prozess gebildet ist,
**dadurch gekennzeichnet, dass** die Deckschicht (4) aus einem vernetzten Polykondensationsprodukt mindestens eines Kieselsäureesters und mindestens eines zyklischen, Alkyl-, Vinyl- und/oder Arylgruppen enthaltenden Siloxan-Oligomers besteht.

2. Reflektor (1) nach Anspruch 1,
**dadurch gekennzeichnet, dass** der Kieselsäureester ein Ester der Orthokieselsäure mit der allgemeinen Formel Si(OR)₄ ist, wobei R eine Aryl- und/oder insbesondere Alkylgruppe ist.

3. Reflektor (1) nach Anspruch 1 oder 2,
**dadurch gekennzeichnet, dass** der Kieselsäureester Tetraethylorthosilicat (TEOS) oder Tetramethylorthosilicat (TMOS) ist.

4. Reflektor (1) nach einem der Ansprüche 1 bis 3,
**dadurch gekennzeichnet, dass** das Siloxan-Oligomer eine Verbindung mit der chemischen Formel Cyclo-{SiO(CH₃)[CH₂CH₂Si(CH₃)(OC₂H₅)₂]}₄ oder Cyclo-[SiO(CH₃)(CHCH₂)]₄ oder 1,3,5,7-Tetravinyl-1,3,5,7-tetramethylcyclotetrasiloxan ist.

5. Reflektor (1) nach einem der Ansprüche 1 bis 4,
**dadurch gekennzeichnet, dass** der Reflektorkörper (2) aus Aluminium, Magnesium, Kupfer, Titan, Molybdän, Tantal oder Stahl, wie beispielsweise Edelstahl, oder aus Legierungen mit diesen Stoffen, wie beispielsweise Messing, besteht.

6. Reflektor (1) nach einem der Ansprüche 1 bis 5,
**dadurch gekennzeichnet, dass** unter der Deckschicht (4) ein funktionelles Schichtpaket (6) mit optischer und/oder mechanischer Funktion auf den Reflektorkörper (2) aufgebracht ist.

7. Reflektor (1) nach Anspruch 6,
**dadurch gekennzeichnet, dass** als funktionelles Schichtpaket (6) ein optisches Schichtsystem aufgebracht ist.

8. Reflektor (1) nach einem der Ansprüche 1 bis 7,
**dadurch gekennzeichnet, dass** die Deckschicht (4) ein- oder mehrstufig unter Einwirkung von Wärme, mit UV- und/oder mit IR-Strahlung aus Lampen oder Lasern, mit Elektronenstrahlen und/oder mit Heißluft gehärtet ist.

9. Reflektor (1) nach einem der Ansprüche 1 bis 8,
**dadurch gekennzeichnet, dass** die Deckschicht (4) eine Dicke (D4) im Bereich von 0,5 bis 40 µm, vorzugsweise im Bereich von 1 bis 10 µm, aufweist.

10. Reflektor (1) nach einem der Ansprüche 1 bis 9,
**gekennzeichnet durch** eine Ausbildung als Coil mit einer Breite bis zu 1400 mm, vorzugsweise bis zu 1600 mm, und mit einer Dicke (D1) im Bereich von etwa 0,10 bis 1,60 mm, vorzugsweise im Bereich von 0,3 bis 1,0 mm.

11. Verfahren zu Herstellung eines Reflektors (1) für elektromagnetische Strahlung im Wellenlängenbereich von 100 nm bis 1 mm, mit hoher Resistenz gegen Witterungs- und Korrosionseinflüsse, umfassend
- einen metallischen Reflektorkörper (2), der eine reflektierende Oberfläche (3) aufweist,
- oder einen Reflektorkörper (2), auf dem eine Reflexionsschicht (9) abgeschieden ist,
- und eine transparente Schicht, die in einem Sol-Gel-Prozess aus Polysiloxan gebildet und als Deckschicht (4) aufgetragen wird,
**dadurch gekennzeichnet, dass** die Deckschicht (4) durch vernetzende Polykondensation aus mindestens einem Kieselsäureester und mindestens einem zyklischen, Alkyl-, Vinyl- und/oder Arylgruppen enthaltenden Siloxan-Oligomers hergestellt wird.

12. Verfahren nach Anspruch 11,
**dadurch gekennzeichnet, dass** als Kieselsäureester ein solcher nach dem kennzeichnenden Teil eines der Ansprüche 2 oder 3 und/oder als zyklisches, Alkyl-, Vinyl- und/oder Arylgruppen enthaltendes Siloxan-Oligomer ein solches nach dem kennzeichnenden Teil des Anspruchs 4 verwendet wird.

13. Verfahren nach Anspruch 11 oder 12,
**dadurch gekennzeichnet, dass** der Kieselsäureester und das zyklische, Alkyl-, Vinyl- und/oder Arylgruppen enthaltende Siloxan-Oligomer in einem organischen Lösungsmittel, insbesondere in einem Keton oder Alkohol, miteinander zur Reaktion gebracht werden.

14. Verfahren nach einem der Ansprüche 11 bis 13,
**dadurch gekennzeichnet, dass** der Kieselsäureester und das zyklische, Alkyl-, Vinyl- und/oder Arylgruppen enthaltende Siloxan-Oligomer unter Einwirkung mindestens eine Säure hydrolytisch zersetzt und/oder polykondensiert werden.

15. Verfahren nach einem der Ansprüche 11 bis 14,
**dadurch gekennzeichnet, dass** aus den zunächst als Lack auf den Reflektorkörper (2) aufgetragenen Reaktanden der Polykondensation die Deckschicht (4) durch Trocknung und Aushärtung gebildet wird, wobei ein Energieeintrag durch Absorption von poly- oder monochromatischer, beispielsweise mittels Laser eingetragener, optischer Strahlung und/oder durch Wärmeleitung, Konvektion, Elektronenstrahlung und/oder durch Induktionsheizung des Reflektorkörpers (2) und/oder durch elektromagnetische Strahlung außerhalb des optischen Spektrums erfolgt.

16. Verfahren nach Anspruch 15,
**dadurch gekennzeichnet, dass** die Trocknung und Aushärtung in einem Durchlaufofen bei Trocknungszeiten im Bereich von 1 min bis 60 min, vorzugsweise im Bereich von 3 min bis 5 min, und insbesondere einer Behandlungstemperatur im Bereich von 150 °C bis 300 °C, bevorzugt im Bereich von 180 °C bis 250 °C, besonders bevorzugt bei 200 °C, durchgeführt wird.

17. Verfahren nach einem der Ansprüche 11 bis 16,
**gekennzeichnet durch** einen kontinuierlichen Ablauf aller Verfahrensschritte, wobei insbesondere eine Fertigung von Rolle-zu-Rolle erfolgt.

## Claims

1. A reflector (1) for electromagnetic radiation in the wavelength range from 100 nm to 1 mm, with high resistance to effects of weathering and of corrosion, comprising
- a metallic reflector body (2) which has a reflective surface (3),
- or a reflector body (2) on which a reflective layer (9) has been deposited,
- and a transparent outer layer (4) composed of polysiloxane and formed in a sol-gel process,
**characterized in that** the outer layer (4) is composed of a crosslinked polycondensate of at least one silicic ester and of at least one cyclic siloxane oligomer comprising alkyl, vinyl, and/or aryl groups.

2. The reflector (1) as claimed in claim 1,
**characterized in that** the silicic ester is an ester of orthosilicic acid having the general formula Si(OR)₄, where R is an aryl and/or in particular alkyl group.

3. The reflector (1) as claimed in claim 1 or 2,
**characterized in that** the silicic ester is tetraethyl orthosilicate (TEOS) or Tetramethyl orthosilicate (TMOS).

4. The reflector (1) as claimed in any of claims 1 to 3,
**characterized in that** the siloxane oligomer is a compound having the chemical formula cyclo-{SiO(CH₃)[CH₂CH₂Si(CH₃)(OC₂H₅)₂]}₄ or cyclo-[SiO(CH₃)(CHCH₂)]₄ or is 1,3,5,7-tetravinyl-1,3,5,7-tetramethylcyclotetrasiloxane.

5. The reflector (1) as claimed in any of claims 1 to 4,
**characterized in that** the reflector body (2) is composed of aluminum, magnesium, copper, titanium, molybdenum, tantalum, or steel, for example stainless steel, or of alloys with said substances, for example brass.

6. The reflector (1) as claimed in any of claims 1 to 5,
**characterized in that**, under the outer layer (4), a functional layer package (6) with optical and/or mechanical function has been applied to the reflector body (2).

7. The reflector (1) as claimed in claim 6,
**characterized in that** an optical layer system has been applied as functional layer package (6).

8. The reflector (1) as claimed in any of claims 1 to 7,
**characterized in that** the outer layer (4) has been cured in one or more stages with exposure to heat, with UV and/or IR radiation from lamps, or lasers, or with electron beams, and/or with hot air.

9. The reflector (1) as claimed in any of claims 1 to 8,
**characterized in that** the thickness (D4) of the outer layer (4) is in the range from 0.5 to 40 µm, preferably in the range from 1 to 10 µm.

10. The reflector (1) as claimed in any of claims 1 to 9,
**characterized by** coil format with width up to 1400 mm, preferably up to 1600 mm, and with thickness (D1) in the range of about 0.10 to 1.60 mm, preferably in the range from 0.3 to 1.0 mm.

11. A process for producing a reflector (1) for electromagnetic radiation in the wavelength range from 100 nm to 1 mm, with high resistance to effects of weathering and of corrosion, comprising
- a metallic reflector body (2) which has a reflective surface (3),
- or a reflector body (2) on which a reflective layer (9) has been deposited
- and a transparent layer which is formed from polysiloxane in a sol-gel process and is applied as outer layer (4),
**characterized in that** the outer layer (4) is produced by crosslinking polycondensation from at least one silicic ester and from at least one cyclic siloxane oligomer comprising alkyl, vinyl, and/or aryl groups.

12. The process as claimed in claim 11,
**characterized in that** silicic ester used comprises a silicic ester as claimed in the characterizing part of claim 2 or 3, and/or cyclic siloxane oligomer used comprising alkyl, vinyl, and/or aryl groups comprises siloxane oligomer as claimed in the characterizing part of claim 4.

13. The process as claimed in claim 11 or 12,
**characterized in that** the silicic ester and the cyclic siloxane oligomer comprising alkyl, vinyl, and/or aryl groups are reacted with one another in an organic solvent, in particular in a ketone or alcohol.

14. The process as claimed in any of claims 11 to 13,
**characterized in that** the silicic ester and the cyclic siloxane oligomer comprising alkyl, vinyl, and/or aryl groups are decomposed and/or polycondensated hydrolytically under influence of at least one acid.

15. The process as claimed in any of claims 11 to 14,
**characterized in that** the outer layer (4) is formed, by drying and hardening, from the polycondensation reactants initially applied as coating material to the reflector body (2), where energy is introduced via absorption of poly- or monochromatic optical radiation, for example introduced by means of a laser, and/or via conduction of heat, convection, or electron beams, and/or via inductive heating of the reflector body (2), and/or via electromagnetic radiation outside of the visible spectrum.

16. The process as claimed in claim 15,
**characterized in that** the drying and hardening is carried out in a heating tunnel with drying times in the range from 1 min to 60 min, preferably in the range from 3 min to 5 min, and in particular with a treatment temperature in the range from 150°C to 300°C, preferably in the range from 180°C to 250°C, particularly preferably at 200°C.

17. The process as claimed in any of claims 11 to 16,
**characterized by** a continuous sequence of all of the steps in the process, in particular using a roll-to-roll manufacturing process.

## Revendications

1. Réflecteur (1) pour un rayonnement électromagnétique dans la plage de longueurs d'onde de 100 nm à 1 mm, présentant une résistance élevée aux intempéries et aux facteurs corrosifs, comprenant
- un corps (2) de réflecteur métallique, présentant une surface réfléchissante (3),
- ou un corps (2) de réflecteur, sur lequel est déposée une couche de réflexion (9),
- et une couche de recouvrement (4) transparente en un polysiloxane, qui a été formée dans un procédé sol-gel.
**caractérisé en ce que** la couche de recouvrement (4) est constituée par un produit de polycondensation réticulé d'au moins un ester d'acide silicique et d'au moins un oligomère de siloxane cyclique, contenant des groupes alkyle, vinyle et/ou aryle.

2. Réflecteur (1) selon la revendication 1, **caractérisé en ce que** l'ester d'acide silicique est un ester de l'acide orthosilicique de formule générale Si(OR)₄, R représentant un groupe aryle et/ou en particulier alkyle.

3. Réflecteur (1) selon la revendication 1 ou 2, **caractérisé en ce que** l'ester de l'acide silicique est l'orthosilicate de tétraéthyle (TEOS) ou l'orthosilicate de tétraméthyle (TMOS).

4. Réflecteur (1) selon l'une quelconque des revendications 1 à 3, **caractérisé en ce que** l'oligomère de siloxane est un composé présentant la formule chimique cyclo-{SiO(CH₃)[CH₂CH₂Si(CH₃)(OC₂H₅)₂]}₄ ou cyclo-[SiO(CH₃)(CHCH₂)]₄ ou 1,3,5,7-tétravinyl-1,3,5,7-tétraméthylcyclotétrasiloxane.

5. Réflecteur (1) selon l'une quelconque des revendications 1 à 4, **caractérisé en ce que** le corps (2) du réflecteur est en aluminium, magnésium, cuivre, titane, molybdène, tantale ou acier, comme par exemple l'acier noble, ou en alliages de ces substances, comme par exemple le laiton.

6. Réflecteur (1) selon l'une quelconque des revendications 1 à 5, **caractérisé en ce qu'**un paquet (6) fonctionnel de couches, doté d'une fonction optique et/ou mécanique, est appliqué sous la couche de recouvrement (4) sur le corps (2) du réflecteur.

7. Réflecteur (1) selon la revendication 6, **caractérisé en ce qu'**un système optique de couches est appliqué comme paquet (6) fonctionnel de couches.

8. Réflecteur (1) selon l'une quelconque des revendications 1 à 7, **caractérisé en ce que** la couche de recouvrement (4) est durcie en une ou plusieurs étapes sous l'effet de la chaleur, par un rayonnement UV et/ou IR provenant de lampes ou de lasers, par des rayons électroniques et/ou par de l'air chaud.

9. Réflecteur (1) selon l'une quelconque des revendications 1 à 8, **caractérisé en ce que** la couche de recouvrement (4) présente une épaisseur (D4) dans la plage de 0,5 à 40 µm, de préférence dans la plage de 1 à 10 µm.

10. Réflecteur (1) selon l'une quelconque des revendications 1 à 9, **caractérisé par** une conception sous forme de bobine présentant en particulier une largeur de jusqu'à 1400 mm, de préférence de jusqu'à 1600 mm, et une épaisseur (D1) dans la plage d'environ 0,10 mm à 1,60 mm, de préférence dans la plage de 0,3 à 1,0 mm.

11. Procédé pour la fabrication d'un réflecteur (1) pour un rayonnement électromagnétique dans la plage de longueurs d'onde de 100 nm à 1 mm, présentant une résistance élevée aux intempéries et aux facteurs corrosifs, comprenant
- un corps (2) de réflecteur métallique, présentant une surface réfléchissante (3),
- ou un corps (2) de réflecteur, sur lequel est déposée une couche de réflexion (9),
- et une couche transparente qui est formée dans un procédé sol-gel à partir de polysiloxane et appliquée comme couche de recouvrement (4),
**caractérisé en ce que** la couche de recouvrement (4) est préparée par polycondensation réticulante d'au moins un ester d'acide silicique et d'au moins un oligomère de siloxane cyclique, contenant des groupes alkyle, vinyle et/ou aryle.

12. Procédé selon la revendication 11, **caractérisé en ce qu'**on utilise, comme ester de l'acide silicique, un ester selon la partie caractéristique d'une des revendications 2 ou 3 et/ou, comme oligomère de siloxane cyclique contenant des groupes alkyle, vinyle et/ou aryle, un oligomère selon la partie caractéristique de la revendication 4.

13. Procédé selon la revendication 11 ou 12, **caractérisé en ce que** l'ester de l'acide silicique et l'oligomère de siloxane cyclique, contenant des groupes alkyle, vinyle et/ou aryle, sont amenés à réagir l'un avec l'autre dans un solvant organique, en particulier dans une cétone ou un alcool.

14. Procédé selon l'une quelconque des revendications 11 à 13, **caractérisé en ce que** l'ester de l'acide silicique et l'oligomère de siloxane cyclique contenant des groupes alkyle, vinyle et/ou aryle sont décomposés hydrolytiquement et/ou polycondensés sous l'influence d'un acide.

15. Procédé selon l'une quelconque des revendications 11 à 14, **caractérisé en ce qu'**on forme à partir des réactifs de la polycondensation, appliqués d'abord sous forme de laque sur le corps (2) du réflecteur, la couche de recouvrement (4) par séchage et durcissement, l'introduction d'énergie ayant lieu par absorption d'un rayonnement optique polychromatique ou monochromatique, par exemple introduit au moyen d'un laser et/ou par conduction thermique, convexion, rayonnement électronique et/ou par chauffage par induction du corps (2) de réflecteur et/ou par rayonnement électromagnétique en dehors du spectre optique.

16. Procédé selon la revendication 15, **caractérisé en ce que** le séchage et le durcissement sont réalisés dans un four continu à des temps de séchage dans la plage de 1 min à 60 min, de préférence dans la plage de 3 min à 5 min, et en particulier à une température de traitement dans la plage de 150°C à 300°C, de préférence dans la plage de 180°C à 250°C, de manière particulièrement préférée à 200°C.

17. Procédé selon l'une quelconque des revendications 11 à 16, **caractérisé par** un déroulement continu de toutes les étapes de procédé, une fabrication de rouleau à rouleau ayant en particulier lieu.
